# EUROPEAN PATENT APPLICATION

(11) **EP 1 212 939 A1**
(43) Date of publication of application: **12.06.2002**
(21) Application number: 01204737.9
(22) Date of filing: 07.12.2001
(51) Int. Cl.: A01K 29/00

(54) **Farm management system provided with cameras for monitoring animals on the farm**

(30) Priority: 08.12.2000 NL 1016836
(71) Applicant: N.V. Nederlandsche Apparatenfabriek NEDAP, 7141 DC Groenlo (NL)
(72) Inventor: Harmsen, Jan Hendrik, 7255 BJ Hengelo (NL); Peezenkamp, Wilfried Remco Martijs, 7553 XJ Hengelo (NL)
(74) Representative: Prins, Adrianus Willem

(57) **Abstract**

A farm management system (1) of a farm (2) for monitoring animals (4.i). The system is provided with a computer (6) with an input for supplying the identity of at least one animal. The farm management system is further provided with a plurality of video cameras (12.j) which are connected with the computer for transmitting image signals to the computer. The cameras (12.j) are arranged such that at least one animal can be observed at any position of a predetermined area of the farm (14) where the at least one animal can go by at least one camera of the cameras. The computer (6) is arranged to process the image signals of the cameras in combination for monitoring the at least one animal in the area (14) on the basis of the image of the animal itself, distinctly from any other animals which are located in the area.

## Description

This invention relates to a farm management system of a farm for monitoring animals, provided with a computer. The invention further relates to a method for monitoring animals.

Such a farm management system is known per se. The farm management system is typically further provided with other farm systems such as an animal identification system, a milking plant and an automatic feeder which are each coupled with the computer. These other farm systems are arranged for obtaining animal information about an identified animal and supplying same to the computer. This animal information can comprise, for instance, information about the milk yield, the temperature and/or the feeding behavior of the animal. This information is stored per animal in the computer of the farm management system. Also, the identity of the animal which can have been obtained through the animal identification system is stored in the computer. Typically, the milking plant and the automatic feeder are also provided with an animal identification system to determine to which animal the obtained animal information, such as the above-mentioned milk yield, temperature and feeding behavior of the animal, belongs.

The object of the invention is to improve the existing farm management systems in the sense that other and/or any supplementary information about the animal is obtained, on the basis of which, if desired, further properties and conditions of the individual animals can be derived.

The farm management system according to the invention is accordingly characterized in that the farm management system is provided with a plurality of cameras which are connected with the computer for sending image signals to the computer; wherein the cameras are arranged such that at least one animal can be observed at each position in a predetermined area of the farm where the at least one animal can go by at least one camera of the cameras, and wherein the computer is arranged to process the image signals of the cameras in combination for monitoring the at least one animal in the area on the basis of the image of the animal itself, distinctly from any other animals located in the area.

Due to the monitoring of the animal taking place on the basis of the image of the animal itself, the animal does not need to wear any special marker.

Due to the farm management system according to the invention enabling the animal to be monitored, a large number of advantages are realized. Thus, it is possible to determine at any time where the animal is located in the farm. Also, the movement behavior of the animal can be mapped. Thus, the duration of the residence time in a milking plant which is located in the area can be determined. This can be correlated with the milk yield and the proper operation of the milking plant. It can also be determined how much time, and when, the animal spends within the area in a cubicle. Further, with the aid of the cameras, it can be determined if this is done lying down or standing up. An expert can draw conclusions from this. By monitoring an animal, further, other matters can be determined, such as the time an animal spends at the front gate arranged in the area. Here, possibly a relation with the feed uptake can be established. It can also be established if the animal moves at all. If this is not the case, the animal may be sick. Further, it can be determined at what speed and the manner in which the animal moves. Thus, rut or heat can be signaled. It can also be determined if the animal perhaps causes congestion. In that case, the animal could be a disturbing element within the herd. The farmer can then take measures. It is also possible to determine the time an animal spends in the feeding station arranged in the area. This makes it possible to see if there is any relation with the feed uptake, which may, for instance, be likewise automatically determined with the aid of the feeding station, which is then part of the farm management system. The individual habits of the animal can be established. It is clear that monitoring the animals automatically with the aid of cameras is a great step forward compared with the existing farm management system. Due to the cameras being arranged such that the animal can be registered at any position in the area of the farm where the animal may go, the animal can be monitored continuously. This also means that once the animal has been initially identified, the identity of the animal is preserved because the animal can be monitored everywhere continuously, so that the animal management system continuously knows which animal has which identity.

From French patent application 2759541 it is known to monitor with a camera a marker worn by an animal. This marker can also be an active marker which radiates an identification code of the animal. However, the animal is not monitored on the basis of the image of the animal itself. A disadvantage of the known system is that the animal can lose the marker so that the animal can no longer be followed. Also, the marker may shift relative to the animal, so that it may sag down to a side of the animal and hence disappear from the view of the camera.

In particular, it holds for the farm management system according to the invention that the computer is arranged to receive, via an input of the computer, identification information from the at least one animal and to couple this identification information to the at least one animal which, in use, is monitored by the computer on the basis of the image signals, so that the identity of the at least one animal being monitored continues to be coupled in the system to the at least one animal.

In this way, it is known which at least one animal is monitored. Also, if desired, it can be determined at any time where the animal having the respective identity is located within the area.

Preferably, it holds that the computer is arranged to process the image signals of the cameras in combination for individually following a plurality of animals located in the area. In this way, for instance, in a fully equipped shed with, for instance, a hundred cows, each animal can be monitored separately. Preferably, it then holds that the computer is arranged to receive, via an input of the computer, identification information of each animal of the plurality of animals and to couple this identity information individually to each animal of the plurality of animals which, in use, are monitored by the computer on the basis of the image signals, so that the identity of each animal of the plurality of animals being monitored continues to be coupled in the system to the respective animal and so that at any time with the aid of the computer it can be checked and/or registered where each animal of the plurality of animals is located. In such a farm management system, at any time it is known of each identified animal where the respective individual animal is located. Also, it can be checked at any time which animal is located at a particular position within the area. As the animals are being monitored continuously, this means that the coupling between the identities on the one hand and the animals on the other hand is continuously maintained within the farm management system.

In particular, it holds that the system is further provided with at least one animal identification device which is arranged at a predetermined position in the area and which is connected with the input of the computer for obtaining the identity information of an animal which is located at a predetermined position. The animal identification device can be arranged, for instance, at the entrance of the farm. As soon as the animal enters the farm, the animal is identified. The identity information is then stored in the computer. After the animal has been identified, it is continuously monitored, so that the link between the animal and the identity information is maintained.

The animal identification device can also be used to check whether the correct coupling between animal and identity information is still present. This is because, in theory, it could happen that, for whatever reason, during monitoring, the coupling between the identity information of the animal and the animal being monitored is lost, or that the identity of two animals for whatever reason is mixed up during monitoring, so that two links are lost. This can happen when the animals jump each other, which points to rut. When in that case one of these animals comes within proximity of the animal identification device, the identity information of the animal is determined with the aid of the animal identification device. This information is then supplied to the computer to verify whether it agrees with the identification information which is coupled to the animal being monitored. If this proves not to be the case, the computer can perform a correction in an automatic manner. In that case, it holds that the system is further provided with at least one animal identification device which is arranged at a predetermined position in the area and which is connected with the input of the computer, while the system is arranged to check, with the aid of the at least one animal identification device, whether the identity information such as it is determined with the aid of the at least one animal identification device when the at least one animal being monitored presents at the predetermined position, agrees with the identity information which is coupled to the respective animal.

To prevent loss, during monitoring, of the coupling between the identity information and the animal being monitored, with two animals being monitored, for instance because the respective animals jump over each other, which may be a sign of estrus, the farm management system can preferably be arranged such that the cameras are so arranged that an animal can be observed at any position within at least a subarea of the area by a set of at least two cameras, while the at least two cameras of the set are disposed at two different positions. In the respective subarea, this means that the animal can always be monitored from two different viewpoints. This reduces the chance that two animals which come within mutual proximity are accidentally mixed up by the farm management system. In particular, it then holds that the at least two cameras of the set are arranged on opposite sides of the subarea. The subarea can then be an area of the farm where animals generally come relatively close to each other. To be considered here, for instance, is a subarea where automatic feeders are arranged, since these are subareas where there may be pushing and shoving for food among the animals.

In particular, it further holds that the farm management system is provided with a plurality of animal identification devices which are arranged at a plurality of mutually different positions within the area. In this way, at different positions, the check mentioned can be performed and/or at different positions animals can be admitted to the area. It is naturally also possible that an animal is admitted within the area, while by hand animal identification information of the respective animal is supplied via the input of the computer to the farm management system. Monitoring the respective animal with an identification information coupled to the animal can then be done in the manner as has been discussed above.

The method according to the invention is characterized in that use is made of a computer and a plurality of cameras which are connected with the computer for sending image signals to the computer, wherein the cameras are so arranged that an animal can be observed at any position in a predetermined area of the farm where an animal can go, by at least one camera of the plurality of cameras, and wherein with the aid of the computer the image signals of the cameras are processed in combination for monitoring the at least one animal in the area, distinctly from any other animals located in the area.

The invention will be further elucidated with reference to the drawing.

In the drawing:

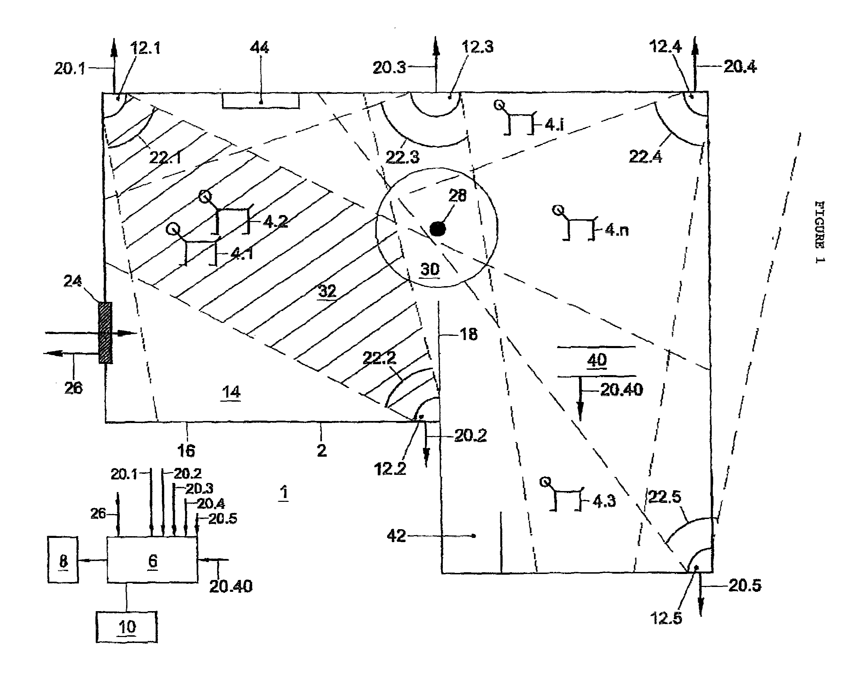

Figure 1 shows a farm management system according to the invention for carrying out a method for monitoring animals according to the invention.

In Fig. 1, reference numeral 1 designates a farm management system of a farm 2 for monitoring animals 4.i (i=1,2, ...n). The farm management system is provided with a computer 6. The computer 6 is provided with a monitor 8 and a keyboard 10. The farm management system is further provided with a plurality of cameras 12.j (j=1, 2,,3 ..., ...n). In this example, n=5 so that five cameras are used.

The farm 2 comprises an area 14 which is in the form of an L, where the animals 4.i can move about freely. The area 14 is surrounded by walls 16, with a portion 18 of the wall 16 extending into the area 14.

The cameras 12.1 in this example are video cameras, known per se. Each video camera 12.j generates a digital image signal which is supplied via a line 20.j to the computer 6. The field of view of the camera 12.j is indicated by the solid angle 22.j. This shows that the cameras 12.j are arranged such that an animal can be observed at any position of the predetermined area 14 where the animal can go, by at least one of the cameras 12.j. In other words, wherever the animal is located, the animal will always be registered with at least one of the cameras 12.j.

The computer 6 is arranged, in a manner known per se, so as to process in combination the image signals of the cameras which are supplied via the lines 20.j to the computer 6, for the purpose of monitoring, for instance, the animal 4.1 on the basis of the image of the animal itself, distinctly from any other animals. To that end, the computer 2 comprises pattern recognition software, known per se, which is arranged to recognize an image of an animal, in this example a cow. Recognizing and thereby monitoring other animals such as pigs, horses and the like are also possibilities. In this example, five animals are located in the area, while it holds that the computer is arranged to process the image signals from the cameras in combination for individually monitoring each of the five animals located in the area. This can be effected in that with the aid of the pattern recognition software known per se, in a parallel manner, five animals are individually followed.

This means that when, for instance, with the aid of the keyboard or mouse 10 the animal 4.2 is designated, the computer will follow the movements and displacements of the animal 4.2 within the area and can make it clear at any time where the respective animal is located. To that end, for instance on the display 8, a map of the area 14 can be shown. The map will then be displayed such as the area 14 is shown in Fig. 1. The animal 4.1 is then, for instance, provided with identity information in the form of an identification code 4.1, the animal 4.2 with an identification code 4.2 and the animal 4.n with an identification code 4.n. The respective codes are displayed adjacent the respective animal, as can be seen in the drawing. In this way, it can be checked at any time where a particular animal is located. Conversely, it can also be checked which animal is located at a particular position.

The identification codes can be supplied to the computer via an input of the computer. In this example, also the keyboard 10 is regarded as a possible input for supplying identification codes. This can be relevant for initializing the system. When initializing the system, with the aid of the keyboard and/or the mouse 10, a particular animal is provided with an identification code. In other words, an identification code is coupled to a particular animal. Once this identification code has been coupled to a particular animal, this coupling is maintained, also when the animal proceeds to move about within the area. Indeed, by virtue of the set-up of the cameras, the animal can be observed at any point of the area where it goes to, and hence can be followed without loss of the coupling mentioned. In particular, in this way, each animal is coupled with a unique identification code. After this initialization, the respective animals can be followed with the aid of the computer on the basis of the image signals, so that the identity of each animal of the plurality of animals being monitored is known at the computer system because the above-mentioned coupling between identification code and animal is maintained during monitoring. This in turn means that at any time, with the aid of the computer, it can be determined and/or registered where each animal of a plurality of animals is and/or was. The registration referred to can, for instance, be stored on a hard disk of the computer. The movement behavior of the individual animals can be accurately analyzed in this manner.

In the example, it holds that the farm management system is further provided with a first animal identification device 24 which is designed as an identification gate along which the animal must pass to enter or leave the area 14. The animal identification device is connected with the computer 6 via a line 26. When an animal is led via the identification gate 24 to the area 14, the animal will be identified in a manner known per se. To that end, the gate generates, for instance, an electromagnetic interrogation field, known per se. To that end, the animal may be provided with a responder or transponder known per se (for instance provided with a resonant circuit which is coupled to a microprocessor in which the identification code is stored) which is provided with a unique identification code. The responder or transponder can be designed as an absorption system or transmission system, known per se. When this identification code is read out, it is supplied to the computer 6. At the same time, the animal, when entering the space 14, will be observed with the aid of the camera 12.3. As of that moment, a coupling is effected by the computer 6 between the animal entering and the respective unique identification code read with the aid of the identification device 24. When the animal proceeds to move through the area, the animal will be monitored with the aid of the cameras. Wherever the animal is located, at least one of the cameras will have the animal within view, with the result that the computer 6 is capable of monitoring the course of the animal through the area 14. At the same time, this means that the unique identification code remains coupled to the respective animal, in other words, on the map of the area 14 which is displayed on the display 8, the animal, together with its unique identification code, is visible.

In the example, the system is further provided with a second animal identification device 28 which is arranged at a predetermined position 30 within the area 14. This identification device 28 is connected with the computer 6 via line 29. When one of the animals 4.i is located adjacent the animal identification device 28, this identification device can read out the unique identification code of the animal from the transponder or responder of the animal in a manner known per se. However, because the animal is further being monitored by the farm management system whereby, during monitoring, a coupling between the unique identification code and the respective animal is present, it can be checked in this way whether the correct identification code is coupled to the animal. In the course of time, each of the animals will at some point come within proximity of the identification device 28, so that for each of the animals the coupling with the unique identification code can be checked. When it is found that an incorrect identification code has been coupled to the animal, this can be corrected by the computer in an automatic manner.

A possible cause due to which, during monitoring of an animal, the coupling with its unique identification code may be lost, may reside in the circumstance that a first animal is going to stand in the field of view of the camera, so that the camera temporarily cannot view a second animal which, relative to the camera, is located behind the first animal. When the second animal, from behind the first animal, comes within view of the respective camera again, it may happen that the unique identification codes of the first and the second animal are confused with each other, which then results in incorrect links between the two animals and their two unique identification codes. This can be remedied again when one of the animals comes within proximity of the second identification device 28. It will then be established that the animal moving within proximity of the second identification device is coupled to the unique identification code of the first animal, while with the aid of the identification device 28 the unique identification code of the second animal is read out. The computer system can then establish that identification codes of the first and second animal have apparently been interchanged and correct this as discussed hereinbefore.

When it is known that in particular subareas 32 (hatched in the drawing), animals tend to move close to each other and/or jump each other, so that a mutual mix-up of unique identification codes seems possible, a special measure can be taken in accordance with the invention. In this example, the cameras are therefore arranged such that an animal located at any position, of at least the subarea 32 in this example, can be observed by a set of at least two cameras. These two cameras, in this example the cameras 12.1 and 12.2, are arranged at two mutually different positions. This has as a result that when, for instance, the first animal 4.1 is in the field of view of the camera 12.1 so that the second animal 4.2 is not observable for the camera 12.1, this second animal 4.2 is still observable for the second camera 12.2. This greatly reduces the chance that with such a camera setup the coupling between an animal and a unique identification code is lost when the animals are in mutual proximity, pass each other and/or jump each other. This behavior can be associated with rut.

In particular, it holds that the at least two cameras of the set are arranged on opposite sides of the subarea 32. This is also the case in this example.

Now that the animals can be monitored in an individual manner with the aid of the farm management system, the path each animal traverses through the area 14 can be determined and optionally recorded for further analysis. On the basis of the path that is recorded, various data can be derived. Thus, for instance, a length of a residence time in a milking plant 40 can be determined. If this milking plant 40 consists, for instance, of an automatic milking robot, connected with the computer 6 via a line 20, 40, which milking robot performs a variety of measurements such as the milk yield, temperature of the milk, the conductivity of the milk, etc., possibly a relationship can be established between the residence time and the moment at which the animal resides in the milking plant and the other measurements such as the milk yield. If the animal enters a separated space, which can be, for instance, a fishbone milking parlor, the system can record the animal sequential order of entry. With this datum, coupled to the software 'milking module', now the milking position (stand where an animal is milked) can be determined. After leaving the separated space, the animal must be identified again.

It is also conceivable that the separated space, such as a milking parlor, is equipped with a camera, coupled to a walk-through recognition which detects the animals. This is to obtain a reliable determination of the animal sequential order, at, for instance, the milk stands, if one of the animals has been missed by the walk-through recognition. Because the spaces are surrounded with walls, the system will lose 'eye contact' with he animals, so that a new registration with the aid of a recognition point will have to take place.

It could also be conceivable that the camera in the space indicates in what order the animals leave the space, so that with the aid of software it can be made knowable to the system outside the space which animal will come into view first again. This could be qualified as a kind of transfer of data from satellite systems to the main system.

It can also be determined when and how long an animal spends in a cubicle. The cubicle in this example consists of the subarea 32. In particular, it can then be further registered if the animal spends its time in the cubicle lying down or standing up. It can also be determined when and how long the animal is located at the feeding gate 42. A relation with the feed uptake can be established. In addition, it can be registered whether the animal moves at all. If not, this may be an indication of a disease. In that case, the farm management system can generate an alarm. Also, the animal can be localized at any time, i.e., the location of the animal in the shed, that is, in the area 14, can be determined. It can also be determined how fast the animal moves or in what way the respective animal moves. On the basis thereof, conclusions regarding heat can be drawn. It can also be determined whether a particular animal perhaps causes congestion in the area 14. When a particular animal does so, this respective animal may be a disturbing element within the herd. This behavior can be detected and analyzed with the aid of the farm management system, whereafter, for instance, a farmer can take measures. One of these measures is, for instance, the removal of the respective animal from the herd, examining the animal to explain the behavior and, if necessary, remedying it, etc. Also, with the aid of the farm management system, it can be determined how much time, if any, an animal spends at a feeding station 44. This time, and also the moment at which the animal spends its time in the feeding station, can then be correlated with the feed uptake. In addition, individual habits of the animals can be recorded. It is also possible, on the basis of the movements of the animal, to register estrus or heat. The farm management system for monitoring the animals therefore provides a large number of supplemental possibilities which are of particular interest to stock farming.

In the example, the term 'monitoring an animal' can be understood to encompass the registration of the path traversed over time by the respective animal on a map of the area 14, optionally including an associated time registration. At a somewhat higher level, monitoring can also consist in registering the images of the animal moving along the respective path. In that case, also the posture of the animal can be registered, and it can be determined, for instance, whether the animal is standing up or lying down. This involves real images of the respective animal, while in the first case the registered path can also consist of a dotted line on the map of the area 14.

The invention is not limited to the embodiments outlined above. Thus, various types of cameras can be used. The cameras can be both analog and digital video cameras for registering moving images. Also, the cameras may be equipped as analog or digital photo cameras for registering still images in rapid succession. Also, the animal identification devices can consist of devices of any known type. The computer 6 can consist of a personal computer or a mainframe, known per se. Naturally, the farm management system can also be used for monitoring animals in different areas. If desired, the layout can be arranged such that for the entire area at all times at least a pair of cameras are designated which, wherever the animal is located, can always register the animal. In other words, wherever the animal is located in the area, there are always two cameras which are arranged at different positions and which each form an image of the animal. In this example, the cameras are arranged immovably. It is also conceivable, however, that the cameras are movably arranged and that the viewing direction of the cameras is controlled with the aid of a computer 6. Naturally, the viewing direction of the cameras in combination should always be such that the entire area is covered by the cameras. In this way, a subarea can be moved and/or deformed, which subarea is always registered by at least one pair of cameras. In other words, in this example, by tilting the cameras 12.1 and 12.2 relative to each other, the hatched subarea 32 will move and/or deform. This can be done in such a manner that nonetheless the entire area 14 is always covered by at least one of the cameras.

The farm management system can further be coupled to an automatic milking plant, known per se, such as a milking robot, an automatic feeder, and other automatic devices, known per se, which are used on the farm and are controlled by a computer and/or can apply data to a computer. The farm management system can further be arranged to generate an alarm when the behavior of one of the animals falls outside predetermined standards. This generated alarm signal can be communicated to the farmer in various ways.

Such variants are understood to fall within the scope of the invention.

## Claims

1. A farm management system of a farm for monitoring animals, provided with a computer, **characterized in that** the farm management system is further provided with a plurality of cameras which are connected with the computer for transmitting image signals to the computer; wherein the cameras are arranged such that at least one animal can be observed at any position in a predetermined area of the farm where the at least one animal can go by at least one camera of the cameras, and wherein the computer is arranged to process in combination the image signals of the cameras for monitoring the at least one animal in the area on the basis of the image of the animal itself, distinctly from any other animals which are located in the area.

2. A farm management system according to claim 1, **characterized in that** the computer is arranged to receive, via an input of the computer, identity information of the at least one animal and to couple this identity information to the at least one animal which, in use, is monitored by the computer on the basis of the image signals, so that the identity of the at least one animal being monitored remains coupled in the system to the at least one animal.

3. A farm management system according to claim 1, **characterized in that** the computer is arranged to process the image signals of the cameras in combination for individually monitoring a plurality of animals located in the area.

4. A farm management system according to claim 3, **characterized in that** the computer is arranged to receive, via an input of the computer, identity information of each animal of the plurality of animals, and to couple this identity information individually to each animal of the plurality of animals which, in use, are monitored by the computer on the basis of the image signals, so that the identity of each animal of the plurality of animals being monitored remains coupled in the system to the respective animal and so that at any time with the aid of the computer it can be determined and/or registered where each animal of the plurality of animals is located.

5. A farm management system according to claim 2 or 4, **characterized in that** the system is further provided with at least one animal identification device which is arranged at a predetermined position in the area and which is connected with the input of the computer for obtaining said identity information of an animal which is located at the predetermined position.

6. A farm management system according to claim 2, 4 or 5, **characterized in that** the system is further provided with at least one animal identification device which is arranged at a predetermined position in the area and which is connected with the input of the computer; wherein the system is arranged to check, with the aid of the at least one animal identification device, whether the identity information such as it is established with the aid of the at least one animal identification device when the at least one animal being monitored presents at the predetermined position, agrees with the identity information which is coupled to the respective animal.

7. A farm management system according to any one of the preceding claims, **characterized in that** the cameras are arranged such that an animal can be observed at any position in at least a subarea of the area by a set of at least two cameras, the at least two cameras of the set being located at two mutually different positions.

8. A farm management system according to claim 7, **characterized in that** the at least two cameras of the set are arranged on opposite sides of the subarea.

9. A farm management system according to any one of the preceding claims 5 or 6, **characterized in that** the farm management system is provided with a plurality of animal identification devices which are arranged at a plurality of mutually different positions within the area.

10. A farm management system according to any one of the preceding claims, **characterized in that** monitoring one of the animals also relates to registering real images of the animal which, for instance, show whether the animal is lying down or standing up.

11. A method for monitoring animals, **characterized in that** use is made of a computer and a plurality of cameras which are connected with the computer for transmitting image signals to the computer; wherein the cameras are arranged such that an animal can be observed at any position in a predetermined area of the farm where an animal can go by at least one camera of the plurality of cameras, and wherein with the aid of the computer the image signals of the cameras are processed in combination for monitoring the at least one animal in the area, distinctly from any other animals which are located in the area.

12. A method according to claim 11, **characterized in that** with the aid of the computer, identity information of one of the animals is coupled to the at least one animal which, on the basis of the image signals, is monitored distinctly from any other animals, so that the identity of the at least one animal being monitored remains coupled, in the system, to the at least one animal.

13. A method according to claim 11, **characterized in that** with the aid of the computer the image signals of the cameras are processed in combination for individually monitoring a plurality of animals which are located in the area.

14. A method according to claim 13, **characterized in that** with the aid of the computer, identity information is coupled to each of the plurality of animals being monitored, so that the identity of each animal of the plurality of animals being monitored remains coupled to the respective animal and so that with the aid of the computer it can be determined and/or registered where each animal of the plurality of identified animals is located.

15. A method according to any one of the preceding claims 11-14, **characterized in that** the cameras are arranged such that an animal can be observed at any position in at least a subarea of the area by a set of at least two cameras, the at least two cameras of the set being located at mutually different positions.

16. A method according to claim 15, **characterized in that** the at least two cameras of the set are arranged on opposite sides of the subarea.

17. A method according to any one of the preceding claims 12 or 14, **characterized in that** further, use is made of at least one animal identification device which is arranged at a predetermined position in the area for obtaining said identification information of an animal which is located at the predetermined position.

18. A method according to claim 12, 14 or 17, **characterized in that** further, use is made of at least one animal identification device which is arranged at a predetermined position in the area for obtaining identification information of an identified animal being monitored, wherein it is checked whether to the respective animal, identity information is coupled which agrees with the identity information of the respective animal such as it is established with the aid of the at least one animal identification system.

19. A method according to any one of the preceding claims 17 or 18, **characterized in that** use is made of a plurality of animal identification devices which are arranged at a plurality of mutually different positions within the area.

20. A method according to any one of the preceding claims 11-19, **characterized in that** monitoring one of the animals is further carried out such that real images of the animal are registered, which show, for instance, whether the animal is standing up or lying down.
